# EUROPÄISCHE PATENTSCHRIFT

(11) **EP 2 633 965 B1**
(45) Veröffentlichungstag und Bekanntmachung des Hinweises auf die Patenterteilung: **12.10.2016**
(21) Anmeldenummer: 13157374.3
(22) Anmeldetag: 01.03.2013
(51) Int. Cl.: B29B 11/16

(54) **Gekrümmte Preform**
Curved preform
Préforme courbée

(30) Priorität: 01.03.2012 DE 102012101706
(43) Veröffentlichungstag der Anmeldung: 04.09.2013
(73) Patentinhaber: Deutsches Zentrum für Luft- und Raumfahrt e.V., 51147 Köln (DE)
(72) Erfinder: Stahl, Arne, 38102 Braunschweig (DE); Assing, Heiko, 38110 Braunschweig (DE); Borgwardt, Henrik, 38118 Braunschweig (DE)
(74) Vertreter: Aisch, Sebastian

(56) Entgegenhaltungen:
- DE-B4-102009 008 329

## Beschreibung

### Gekrümmte Preform

Die Erfindung betrifft eine Vorrichtung und ein Verfahren zur Herstellung einer gekrümmten Preform, die zumindest teilweise eine Bauteilgeometrie eines herzustellenden Faserverbundbauteils aufweist, aus flächigen Faserhalbzeugen.

Aufgrund der besonders vorteilhaften Eigenschaft, bei einem relativ geringen Gewicht in zumindest eine Richtung eine sehr hohe Steifigkeit aufzuweisen, eignen sich Faserverbundbauteile für eine Vielzahl von Anwendungszwecken. Dabei werden derartige Faserverbundbauteile vermehrt auch für lasttragende Strukturen im Fahrzeug- und Flugzeugbereich eingesetzt, um beispielsweise durch die Reduzierung des Gesamtgewichtes Treibstoff einsparen zu können.

Faserverbundbauteile werden in der Regel aus einem Faserhalbzeug und einem Matrixharz gebildet. Das Matrixharz wird dabei in das Faserhalbzeug injiziert und anschließend ausgehärtet, so dass durch die Harzreaktion ein integrales Bauteil entsteht. Die lasttragenden Fasern des Faserhalbzeuges, die nunmehr in das ausgehärtete Matrixharz eingebettet sind, verleihen dem Bauteil seine enorme Steifigkeit in Faserrichtung.

Die Bauteilform wird in der Regel durch Drapieren der Faserhalbzeuge in oder auf ein sogenanntes Formwerkzeug oder ein separates Preformwerkzeug gebildet. Das Werkzeug weist eine Oberflächenstruktur auf, die der Bauteilgeometrie des herzustellenden Faserverbundbauteils entspricht, wobei die trockenen oder vorgetränkten Fasergelege an die Oberfläche angepasst werden. Bei komplizierteren Strukturen können die Faserhalbzeuge auch durch andere Methoden in die gewünschte Form gebracht werden, was im Allgemeinen als "Preformen" bezeichnet wird. Faserhalbzeuge, die entweder in dem Formwerkzeug oder in einem anderen Umformungsprozess die gewünschte Bauteilgeometrie erhalten haben, werden als "Preform" bezeichnet. Demnach ist eine Preform ein aus Faserhalbzeugen gebildetes Halbzeug, das zumindest teilweise die Bauteilgeometrie des herzustellenden Faserverbundbauteils aufweist.

Ein Vorteil von Faserverbundbauteilen besteht darin, dass die Fasern lastgerecht orientiert werden können, um hohe Lasten bei geringem Gewicht übertragen zu können. Lasten quer zur Faserrichtung des Faserverbundbauteils können dagegen nur schwer getragen werden, so dass die Bauteile in der Regel quer zur Faserrichtung instabil wirken.

So ist es für gekrümmte Profile, wie beispielsweise Z- oder C-Profile, die hauptsächlich auf Biegung beansprucht werden, sehr wichtig, dass die Orientierung der Fasern entlang der Profillänge konstant bleibt. Am Beispiel eines kreisförmig gebogenen Profils bedeutet dies, dass ein Koordinatensystem, nach dem sich die Faserorientierung richtet, auf dem Bauteil um den Kreismittelpunkt rotieren und den Fasern in jedem Punkt auf dem Bauteil eine andere Orientierung vorgeben würden. Aufgrund der größeren Umfangslänge des Außengurtes des Profils muss das Fasermaterial im Bereich des Außengurtes gestreckt und damit der ursprünglich rechtwinklige Faserwinkel zwischen den einzelnen Fasern verändert werden.

Bei Verfahren, bei denen vorab zugeschnittene Faserhalbzeuge drapiert werden, entsteht jedoch der Nachteil, dass die Zuschnitte sich in den Randbereichen anders verhalten als in der Mitte des Zuschnittes. Daraus resultieren variierende Faserwinkel in der gesamten Preform. Dadurch kann jedoch nicht sichergestellt werden, dass im gesamten Profil die geforderten Faserwinkel auftreten.

Darüber hinaus haben derartige Verfahren den Nachteil, dass sie meist einen hohen manuellen Anteil aufweisen, der sie für größere Stückzahlen unwirtschaftlich macht und keine reproduzierbare Qualität gewährleisten können. Dies liegt in der Tatsache begründet, dass der Drapiervorgang, in dem das Material verschert wird, nicht definiert und somit nicht mit genügend großer Wiederholgenauigkeit durchgeführt werden kann.

So ist beispielsweise aus der DE 10 2008 032 574 A1 eine Vorrichtung zur Herstellung faserverstärkter Bauteile bekannt, bei der an einem Grundrahmen eine Drapiereinrichtung vorgesehen ist, mit welcher die Fasergelege über Anlegen eines Vakuums an den Formkern drapierbar sind. Diese Art der Zwangsverformung der Fasergelege hat jedoch den Nachteil, dass auch hier eine definierte und reproduzierbare Verscherung der Fasern nicht gewährleistet werden kann. Darüber hinaus kann es aufgrund von Reibung an dem Formkern bei der Zwangsdrapierung des Fasergeleges dazu kommen, dass das Fasermaterial beschädigt wird, was die Stabilität des späteren Bauteils stark beeinträchtigt.

Aus der DE 10 2009 008 329 B4 ist eine Preform-Vorrichtung zum Preformen eines Textilhalbzeuges bekannt, bei der eine Scherwalze zumindest teilweise eine konische Form aufweist, so dass sich eine Verscherung innerhalb der Faserebene bilden lässt.

Es ist daher Aufgabe der vorliegenden Erfindung eine verbesserte Vorrichtung und ein verbessertes Verfahren anzugeben, mit dem gezielt und mit reproduzierbarer Qualität gekrümmte Preformen hergestellt werden können.

Diese Aufgabe wird mit der Vorrichtung der eingangs genannten Art erfindungsgemäß dadurch gelöst, dass eine Verschereinrichtung vorgesehen ist, die mindestes zwei rotierende, in Walzrichtung voneinander beabstandet angeordnete Walzkörper und eine mit den Walzkörpern verbundene Steuereinrichtung aufweist, wobei die Steuereinrichtung zum Einstellen voneinander verschiedener Umlaufgeschwindigkeiten der Walzkörper eingerichtet ist und die Walzkörper ausgebildet sind, an einem in die Vorrichtung eingebrachten Faserhalbzeug kraftschlüssig anzuliegen und mit diesem derart zusammenzuwirken, dass durch eine zwischen den in Walzrichtung voneinander beabstandet angeordneten Walzkörpern mittels der Steuereinrichtung eingestellten Umlaufgeschwindigkeitsdifferenz eine Verscherung der Fasern des Faserhalbzeuges zur Bildung der Krümmung der herzustellenden gekrümmten Preform gewirkt wird.

Erfindungsgemäß wird eine Vorrichtung vorgeschlagen, die eine Verschereinrichtung aufweist, die aus mindestens zwei rotierenden Walzkörpern besteht. Die rotierenden Walzkörper sind in Walzrichtung voneinander beabstandet angeordnet und mit einer Steuereinrichtung verbunden, welche die Umlaufgeschwindigkeit für jeden Walzkörper separat einstellen kann. Somit lässt sich für jeden Walzkörper eine Umlaufgeschwindigkeit einstellen, die von der Umlaufgeschwindigkeit der anderen Walzkörper verschieden sein kann.

Die Walzkörper sind in der Verschereinrichtung nun derart angeordnet und ausgebildet, dass sie kraftschlüssig an einem in die Vorrichtung eingebrachten Faserhalbzeug anliegen. Wird nun eine Umlaufgeschwindigkeitsdifferenz eingestellt, indem die voneinander beabstandet angeordneten Walzkörper jeweils unterschiedliche Umlaufgeschwindigkeiten aufweisen, so wird durch die Um-laufgeschwindigkeitsdifferenz zwischen den Walzkörpern eine Verscherung der Fasern des Faserhalbzeuges bewirkt, die letztendlich in einer definierten Krümmung des Faserhalbzeuges resultiert. Denn durch ein Verscheren der Fasern, beispielsweise durch Ziehen oder Stauchen des flächigen Faserhalbzeuges, kann dem flächigen Faserhalbzeug eine definierte Krümmung gegeben werden.

Als Walzkörper kommen hierbei jegliche rotierbare Körper in Betracht, die kraftschlüssig an dem Fasermaterial anliegen können und aufgrund der Umlaufgeschwindigkeitsdifferenz eine Verscherung der Fasern bewirken können. Die Walzkörper können dabei beliebige Formen, wie beispielsweise Zylinder- oder Kegelformen, aufweisen, die geeignet sind an dem Fasermaterial anzuliegen und eine Verscherung zu bewirken.

Mit Hilfe der Erfindung wird es somit möglich, eine aktive und definierte Verscherung des Fasermaterials aufgrund der Differenzgeschwindigkeit zwischen den Walzkörpern zu bewirken, so dass sich eine wiederkehrende reproduzierbare Qualität gewährleisten lässt.

Durch eine gegenüber dem Walzkörper angeordnete Andrückfläche kann der Kraftschluss des Walzkörpers mit dem Fasermaterial hergestellt werden.

In einer vorteilhaften Ausführungsform wird bei mindestens einem Walzkörper ein gegenüberliegender, gegensinnig rotierender Walzkörper in der Verschereinrichtung angeordnet, um ein Walzkörperpaar zu bilden. Die beiden Walzkörper des Walzkörperpaares sind dabei so ausgebildet, dass das Faserhalbzeug in Walzrichtung zwischen den beiden Walzkörpern des Walzkörperpaares geführt werden kann. Beide Walzkörper liegen somit kraftschlüssig an je einer Seite des flächigen Faserhalbzeuges an. Durch die Bildung eines Walzkörperpaares erfolgt der Kraftschluss der Walzkörper mit dem Faserhalbzeug.

Existieren mindestens zwei Walzkörperpaare in der Verschereinrichtung, so wird durch die Walzkörper gleichzeitig auch eine Vorschubeinheit gebildet, die das flächige Faserhalbzeug zwischen den Walzkörpern der Walzkörperpaare führt und somit durch die Verschereinrichtung fördert.

In einer ganz besonders vorteilhaften Ausführungsform ist die Vorrichtung eingerichtet, ein gekrümmtes Preformprofil, beispielsweise ein Z- oder C-Profil, mit einer definierten Krümmung herzustellen. Hierfür weist die Verschereinrichtung der Vorrichtung mindestens drei Walzkörper auf, wobei mindestens zwei der drei Walzkörper gegenüberliegend angeordnet sind und an jeweils einen Flansch des herzustellenden Profils kraftschlüssig anliegen. Die beiden gegenüberliegenden Walzkörper, die jeweils an unterschiedlichen Flanschen anliegen, werden dabei mit der gleichen Umlaufgeschwindigkeit mittels der Steuereinrichtung eingestellt. Mindestens einer der mindestens drei Walzkörper wird hingegen in Walzrichtung beabstandet angeordnet und wird von der Steuereinrichtung mit einer von den beiden anderen Walzkörpern verschiedenen Umlaufgeschwindigkeit eingestellt, so dass sich zwischen den mindestens zwei gegenüberliegenden Walzkörpern und den mindestens dritten beabstandet angeordneten Walzkörper eine Umlaufgeschwindigkeitsdifferenz einstellen lässt. Diese eingestellte Umlaufgeschwindigkeitsdifferenz führt dann zu einer Verscherung im Innen- oder Außengurt des Profils und ermöglicht so die Herstellung eines gekrümmten Preformprofils mit definierter Verscherung des Fasermaterials und so mit kontinuierlich hoher Qualität.

Hierbei ist es besonders vorteilhaft, wenn bei jedem der mindestens drei Walzkörper ein gegenüberliegender, gegensinnig rotierender Walzkörper vorgesehen ist, die jeweils zusammen ein Walzkörperpaar bilden. Demnach weist die Vorrichtung in dieser vorteilhaften Ausführungsform mindestens drei Walzkörperpaare auf, die zur Herstellung des gekrümmten Preformprofils ausgebildet sind. Mindestens zwei der drei Walzkörperpaare sind dabei direkt gegenüber an den beiden Flanschen des Profils angeordnet, während das dritte Walzkörperpaar in Walzrichtung von mindestens einem der anderen beiden Walzkörperpaare beabstandet angeordnet ist. Zwischen den Walzkörpern der jeweiligen Walzkörperpaare wird der jeweilige Flansch des herzustellenden Preformprofils geführt, wobei durch Einstellen einer Umfangsgeschwindigkeitsdifferenz zwischen den beabstandet angeordneten Walzkörperpaaren eine Verscherung der Fasern entsprechend der vorliegenden Erfindung bewirkt wird, die dann zu der Krümmung des Profils in reproduzierbarer Qualität führt.

Darüber hinaus ist es ganz besonders vorteilhaft, wenn die Steuereinrichtung derart eingerichtet ist, dass sie während des Umformprozesses die Umlaufgeschwindigkeit der Walzkörper derart variieren kann, dass während des gesamten Umformprozesses variierende Umlaufgeschwindigkeitsdifferenzen einstellbar sind, so dass der Krümmungsradius der Krümmung der herzustellenden Preform variiert. Dadurch wird es möglich, dass Preformen bzw. Preformprofile herstellbar sind, die einen variierenden Krümmungsradius haben.

Die Aufgabe wird im Übrigen auch mit dem Verfahren der eingangs genannten Art erfindungsgemäß gelöst durch
a) Bereitstellen einer Vorrichtung mit einer Verschereinrichtung, die mindestens zwei rotierende, in Walzrichtung voneinander beabstandet angeordnete Walzkörper und eine mit den Walzkörpern verbundene Steuereinrichtung aufweist,
b) Einbringen des flächigen Faserhalbzeuges in die Verschereinrichtung der Vorrichtung derart, dass das flächige Faserhalbzeug kraftschlüssig an den Walzkörpern anliegt, und
c) Einstellen einer Umlaufgeschwindigkeit für jeden Walzkörper derart, dass durch eine zwischen den in Walzrichtung voneinander beabstandet angeordneten Walzkörpern mittels der Steuereinrichtung eingestellte Umlaufgeschwindigkeitsdifferenz eine Verscherung der Fasern des Faserhalbzeuges zur Bildung der Krümmung der herzustellenden gekrümmten Preform bewirkt wird.

Vorteilhafte Ausgestaltungen des Verfahrens finden sich in den entsprechenden Unteransprüchen.

Die Erfindung wird anhand der beigefügten Figuren beispielhaft näher erläutert. Es zeigen:
- Figur 1: - erfindungsgemäße Vorrichtung zur Herstellung einer gekrümmten Preform;
- Figur 2: - perspektivische Darstellung eines C-Profils.

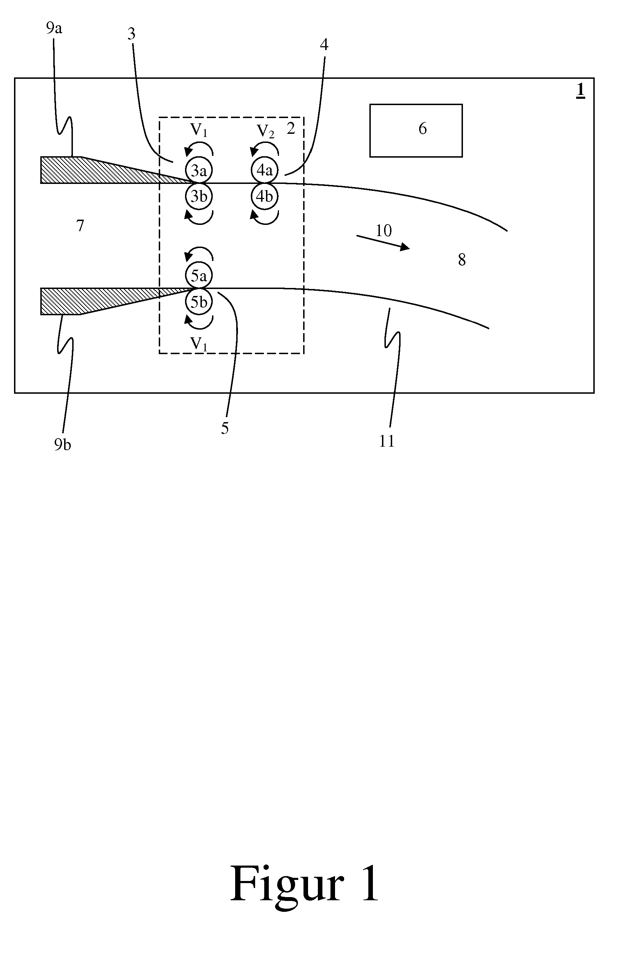

Figur 1 zeigt schematisch vereinfacht die Vorrichtung 1 in einer Draufsicht. Die Vorrichtung 1 hat eine Verschereinrichtung 2, die insgesamt drei Walzkörperpaare 3, 4 und 5 aufweist. Das Walzkörperpaar 3 hat dabei zwei gegenüberliegend angeordnete Walzkörper 3a und 3b, die gegensinnig rotieren und zwischen denen ein Fasermaterial geführt werden kann. In identischer Weise sind die Walzkörperpaare 4 und 5 ausgebildet, die jeweils über zwei Walzkörper 4a, 4b und 5a, 5b verfügen.

Die Walzkörper der drei Walzkörperpaare 3, 4 und 5 sind mit einer Steuereinrichtung 6 verbunden, welche die einzelnen Walzkörper der Walzkörperpaare derart ansteuert, dass ihre Umlaufgeschwindigkeit V₁, V₂ jeweils einstellbar ist. Die physische Verbindung ist in Figur 1 aus Übersichtlichkeitsgründen nicht gezeigt.

Die Vorrichtung 1 ist in Figur 1 dazu ausgebildet, aus einem flächigen Faserhalbzeug 7 ein gekrümmtes Preformprofil 8, das ein C-Profil aufweist, herzustellen. Hierzu werden die Kanten 9a, 9b des flächigen Faserhalbzeuges 7 zwischen die Walzkörper der jeweiligen Walzkörperpaare geführt, so dass die Kanten 9a, 9b des Faserhalbzeuges die späteren Flansche des gekrümmten C-Profils 8 bilden.

Daher wird mit dieser Vorrichtung nicht nur die Krümmung des Preformprofils realisiert, sondern gleichzeitig auch die gewünschte Profilform hergestellt.

Die Walzkörperpaare 3 und 5 der Vorrichtung 1 sind dabei gegenüberliegend an den jeweiligen Kanten des Faserhalbzeuges angeordnet und werden durch die Steuereinrichtung 6 so angesteuert, dass die Walzkörper 3a, 3b, 5a, 5b jeweils dieselbe Umlaufgeschwindigkeit haben.

Das Walzkörperpaar 4 mit den Walzkörpern 4a und 4b wird hingegen so angeordnet, dass es von dem Walzkörperpaar 3 in Walzrichtung 10 beabstandet angeordnet ist. Die Walzkörperpaare 3 und 4 greifen somit an dem gleichen Flansch 9a des Profils 8 an. Die Umlaufgeschwindigkeit der Walzkörper 4a, 4b des Walzkörperpaares 4 ist dabei von der Umlaufgeschwindigkeit V₁ der Walzkörperpaare 3 und 5 verschieden. Es ergibt sich somit eine Umlaufgeschwindigkeitsdifferenz V₂-V₁, die zu einer Faserverscherung des Faserhalbzeuges 7 führt und somit zu einer gewünschten Krümmung 11 des Preformprofils 8.

Durch Variation der Umlaufgeschwindigkeitsdifferenz V₂-V₁ kann der Krümmungsradius der Krümmung 11 entsprechend eingestellt werden, wobei die Steuereinrichtung 6 derart eingerichtet sein kann, dass sie während des Umformprozesses, d.h. während das Faserhalbzeug 7 durch die Verschereinrichtung 2 befördert wird, die Umlaufgeschwindigkeitsdifferenz V₂-V₁ so einstellen kann, dass sich ein Profil mit unterschiedlichen Krümmungsradien ergibt.

Hierdurch kann gezielt ein variabler Krümmungsradius mit gleichbleibender Qualität hergestellt werden.

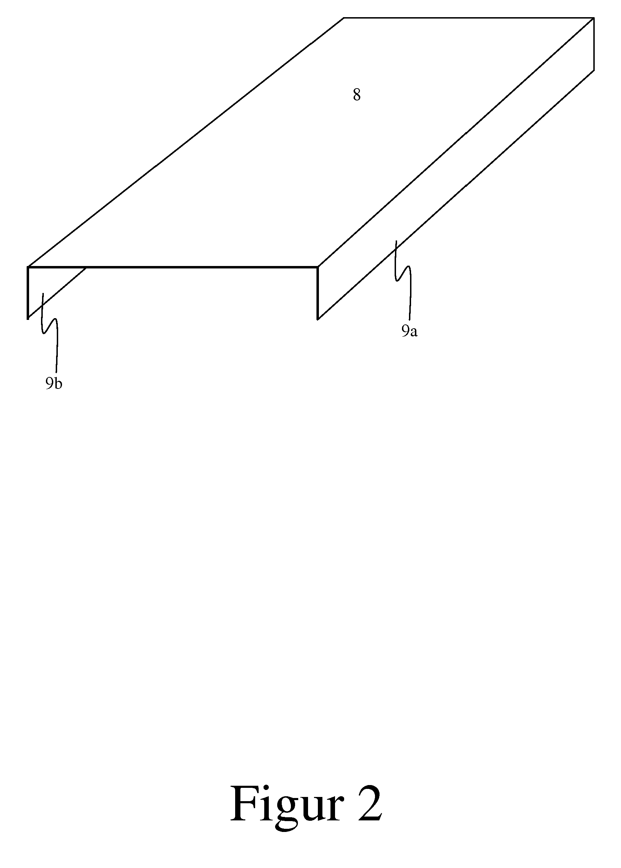

Figur 2 zeigt ein fertig hergestelltes Preformprofil 8, das jeweils links und rechts umgeformte Flansche 9a, 9b hat. Durch das Angreifen der Walzkörper der Vorrichtung an den Flanschen 9a, 9b in der zuvor beschriebenen Art und Weise und dem Einstellen einer Geschwindigkeitsdifferenz zwischen beabstandet angeordneten Walzkörpern lässt sich eine Faserverscherung bewirken, die letztendlich zu einer Krümmung des Profils 8 führt.

## Patentansprüche

1. Vorrichtung (1) zur Herstellung einer gekrümmten Preform (8), die zumindest teilweise eine Bauteilgeometrie eines herzustellenden Faserverbundbauteils aufweist, aus flächigen Faserhalbzeugen (7), **dadurch gekennzeichnet, dass** eine Verschereinrichtung (2) vorgesehen ist, die mindestens zwei rotierende, in Walzrichtung (10) voneinander beabstandet angeordnete Walzkörper (3a, 4a) und eine mit den Walzkörpern (3a, 4a) verbundene Steuereinrichtung (6) aufweist, wobei die Steuereinrichtung (6) zum Einstellen voneinander verschiedener Umlaufgeschwindigkeiten (V1, V2) der Walzkörper (3a, 4a) eingerichtet ist und die Walzkörper (3a, 4a) ausgebildet sind, an einem in die Vorrichtung (1) eingebrachten Faserhalbzeug (7) kraftschlüssig anzuliegen und mit diesem derart zusammenzuwirken, dass durch eine zwischen den in Walzrichtung (10) voneinander beabstandet angeordneten Walzkörpern (3a, 4a) mittels der Steuereinrichtung (6) eingestellten Umlaufgeschwindigkeitsdifferenz (V2-V1) eine Verscherung der Fasern des Faserhalbzeuges (7) zur Bildung der Krümmung (11) der herzustellenden gekrümmten Preform (8) bewirkt wird, wobei die Steuereinrichtung die einzelnen Walzkörper derart ansteuert, dass ihre Umlaufgeschwindigkeit (U₁, U₂) jeweils einstellbar ist.

2. Vorrichtung (1) nach Anspruch 1, **dadurch gekennzeichnet, dass** bei mindestens einem Walzkörper (3a, 4a, 5a) ein gegenüberliegender, gegensinnig rotierender Walzkörper (3b, 4b, 5b) zur Bildung eines Walzkörperpaares (3, 4, 5) angeordnet ist, wobei zwischen den gegensinnig rotierenden Walzkörpern des Walzkörperpaares das flächige Faserhalbzeug (7) in Walzrichtung (10) geführt wird.

3. Vorrichtung (1) nach Anspruch 1 oder 2, **dadurch gekennzeichnet, dass** die Verschereinrichtung (2) mindestens drei Walzkörper (3a, 4a, 5a) aufweist, wobei mindestens zwei der mindestens drei Walzkörper (3a, 5a) gegenüberliegend an jeweils einem Flansch (9a, 9b) eines herzustellenden Preformprofils (8) anliegen und mindestens einer der drei Walzkörper (4a) in Walzrichtung (10) von den mindestens zwei gegenüberliegenden Walzkörpern (3a, 5a) beabstandet angeordnet ist und an einem der Flansche (9a) des herzustellenden Preformprofils (8) anliegt, und wobei die Steuereinrichtung (6) eingerichtet ist, bei den mindestens zwei gegenüberliegenden Walzkörpern (3a, 5b) dieselbe Umlaufgeschwindigkeit (V1) einzustellen und bei dem mindestens einen in Walzrichtung (10) beabstandet angeordneten Walzkörper (4a) eine hiervon verschiedene Umlaufgeschwindigkeit (V2) einzustellen, um die Umlaufgeschwindigkeitsdifferenz (V2-V1) für die Verscherung der Fasern zu bewirken.

4. Vorrichtung (1) nach Anspruch 3, **dadurch gekennzeichnet, dass** bei jedem der mindestens drei Walzkörper (3a, 4a, 5a) ein gegenüberliegender, gegensinnig rotierender Walzkörper (3b, 4b, 5b) zur Bildung eines Walzkörperpaares (3, 4, 5) angeordnet ist, zwischen denen der jeweilige Flansch (9a, 9b) des herzustellenden Preformprofils (8) geführt wird.

5. Vorrichtung (1) nach einem der vorhergehenden Ansprüche, **dadurch gekennzeichnet, dass** die Steuereinrichtung (6) eingerichtet ist, während des Umformprozesses die Umlaufgeschwindigkeit (V1, V2) der Walzkörper derart zu variieren, dass der Krümmungsradius der Krümmung (11) der herzustellenden Preform variiert.

6. Verfahren zur Herstellung einer gekrümmten Preform, die zumindest teilweise eine Bauteilgeometrie eines herzustellenden Faserverbundbauteils aufweist, aus flächigen Faserhalbzeugen, **gekennzeichnet durch**
a) Bereitstellen einer Vorrichtung mit einer Verschereinrichtung, die mindestens zwei rotierende, in Walzrichtung voneinander beabstandet angeordnete Walzkörper und eine mit den Walzkörpern verbundene Steuereinrichtung aufweist,
b) Einbringen des flächigen Faserhalbzeuges in die Verschereinrichtung der Vorrichtung derart, dass das flächige Faserhalbzeug kraftschlüssig an den Walzkörpern anliegt, und
c) Einstellen einer Umlaufgeschwindigkeit für jeden Walzkörper derart, dass **durch** eine zwischen den in Walzrichtung voneinander beabstandet angeordneten Walzkörpern mittels der Steuereinrichtung eingestellten Umlaufgeschwindigkeitsdifferenz eine Verscherung der Fasern des Faserhalbzeuges zur Bildung der Krümmung der herzustellenden gekrümmten Preform bewirkt wird, wobei die Steuereinrichtung die einzelnen Walzkörper derart ansteuert, dass ihre Umlaufgeschwindigkeit jeweils eingestellt wird.

7. Verfahren nach Anspruch 6, **gekennzeichnet durch** Bereitstellen der Vorrichtung mit der Verschereinrichtung derart, dass der mindestens eine Walzkörper ein gegenüberliegender, gegensinnig rotierender Walzkörper zur Bildung eines Walzkörperpaares angeordnet ist, wobei zwischen den gegensinnig rotierenden Walzkörpern des Walzkörperpaares das flächige Faserhalbzeug in Walzrichtung geführt wird.

8. Verfahren nach einem der Ansprüche 6 oder 7, **gekennzeichnet durch** Bereitstellen der Vorrichtung mit der Verschereinrichtung derart, dass die Verschereinrichtung mindestens drei Walzkörper aufweist, wobei mindestens zwei der mindestens drei Walzkörper gegenüberliegend an jeweils einem Flansch eines herzustellenden Preformprofils anliegen und mindestens einem der drei Walzkörper in Walzrichtung von den mindestens zwei gegenüberliegenden Walzkörpern beabstandet angeordnet ist und an einem der Flansche des herzustellenden Preformprofils anliegt, und Einstellen der Umlaufgeschwindigkeit der Walzkörper mittels der Steuereinrichtung derart, dass bei den mindestens zwei gegenüberliegenden Walzkörpern dieselbe Umlaufgeschwindigkeit eingestellt wird und dass bei dem mindestens einem in Walzrichtung beabstandet angeordneten Walzkörper eine hiervon verschiedene Umlaufgeschwindigkeit eingestellt wird, um die Umlaufgeschwindigkeitsdifferenz für die Verscherung der Fasern zu bewirken.

9. Verfahren nach Anspruch 8, **gekennzeichnet durch** Bereitstellen der Vorrichtung mit der Verschereinrichtung derart, dass bei jedem der mindestens drei Walzkörper ein gegenüberliegender, gegensinnig rotierender Walzkörper zur Bildung eines Walzkörperpaares angeordnet ist, zwischen denen der jeweilige Flansch des herzustellenden Preformprofils geführt wird.

10. Verfahren nach einem der Ansprüche 6 bis 9, **gekennzeichnet durch** Variieren der Umlaufgeschwindigkeit des Walzkörpers mittels der Steuereinrichtung während des Umformprozesses derart, dass der Krümmungsradius der Krümmung der herzustellenden Preform variiert wird.

## Claims

1. Device (1) for producing a curved preform (8), which at least to some extent has a component geometry of a fibre-composite component that is to be produced, from flat semi-finished fibre products (7), **characterised in that** a shearing apparatus (2) is provided, which has at least two rotating rolling bodies (3a, 4a) arranged spaced from one another in the rolling direction (10) and a control apparatus (6) connected to the rolling bodies (3a, 4a), wherein the control apparatus (6) is set up for setting mutually different rotating speeds (V₁, V₂) of the rolling bodies (3a, 4a) and the rolling bodies (3a, 4a) are constructed to bear non-positively on a semi-finished fibre product (7) introduced into the device (1) and to interact with the same in such a manner that shearing of the fibres of the semi-finished fibre product (7) is effected by means of a rotating-speed differential (V₂-V₁) set by means of the control apparatus (6) between rolling bodies (3a, 4a) arranged spaced from one another in the rolling direction (10), for forming the curvature (11) of the curved preform (8) to be produced, wherein the control apparatus controls the individual rolling bodies in such a manner that the rotating speed (U₁, U₂) thereof can be set in each case.

2. Device (1) according to Claim 1, **characterised in that** in the case of at least one rolling body (3a, 4a, 5a), an opposite rolling body (3b, 4b, 5b) rotating in the opposite direction is arranged to form a rolling body pair (3, 4, 5), wherein the flat semi-finished fibre product (7) is guided in the rolling direction (10) between the two rolling bodies of the rolling body pair rotating in opposite directions.

3. Device (1) according to Claim 1 or 2, **characterised in that** the shearing apparatus (2) has at least three rolling bodies (3a, 4a, 5a), wherein at least two of the at least three rolling bodies (3a, 5a) bear oppositely against a flange (9a, 9b) of a preform profile (8) to be produced in each case and at least one of the three rolling bodies (4a) is arranged spaced in the rolling direction (10) from the at least two opposite rolling bodies (3a, 5a) and bears against one of the flanges (9a) of the preform profile (8) to be produced, and wherein the control apparatus (6) is set up to set the same rotating speed (V₁) for the at least two opposite rolling bodies (3a, 5b) and to set a rotating speed (V₂) different therefrom for the at least one rolling body (4a) arranged spaced in the rolling direction (10), in order to effect the rotating-speed differential (V₂-V₁) for the shearing of the fibres.

4. Device (1) according to Claim 3, **characterised in that** for each of the at least three rolling bodies (3a, 4a, 5a), an opposite rolling body (3b, 4b, 5b) rotating in the opposite direction is arranged to form a rolling body pair (3, 4, 5), between which the respective flange (9a, 9b) of the preform profile (8) to be produced is guided.

5. Device (1) according to one of the preceding claims, **characterised in that** the control apparatus (6) is set up to vary the rotating speed (V₁, V₂) of the rolling bodies in such a manner during the shaping process that the radius of curvature of the curvature (11) of the preform to be produced varies.

6. Method for producing a curved preform, which at least to some extent has a component geometry of a fibre-composite component that is to be produced, from flat semi-finished fibre products, **characterised by**
a) providing a device with a shearing apparatus, which has at least two rotating rolling bodies arranged spaced from one another in the rolling direction and a control apparatus connected to the rolling bodies,
b) introducing the flat semi-finished fibre product into the shearing apparatus of the device in such a manner that the flat semi-finished fibre product bears against the rolling bodies non-positively, and
c) setting a rotating speed for each rolling body in such a manner that shearing of the fibres of the semi-finished fibre product is effected, by means of a rotating-speed differential set by means of the control apparatus between rolling bodies arranged spaced from one another in the rolling direction, for forming the curvature of the curved preform to be produced, wherein the control apparatus controls the individual rolling bodies in such a manner that the rotating speed thereof is set in each case.

7. Method according to Claim 6, **characterised by** providing the device with the shearing apparatus in such a manner that the at least one rolling body, an opposite rolling body rotating in the opposite direction, is arranged to form a rolling body pair, wherein the flat semi-finished fibre product is guided in the rolling direction between the oppositely rotating rolling bodies of the rolling body pair.

8. Method according to one of Claims 6 or 7, **characterised by** providing the device with the shearing apparatus in such a manner that the shearing apparatus has at least three rolling bodies, wherein at least two of the at least three rolling bodies bear oppositely against a flange of a preform profile to be produced in each case and at least one of the three rolling bodies is arranged spaced in the rolling direction from the at least two opposite rolling bodies and bears against one of the flanges of the preform profile to be produced, and setting the rotating speed of the rolling bodies by means of the control apparatus in such a manner that the same rotating speed is set for the at least two opposite rolling bodies and that a rotating speed different therefrom is set for the at least one rolling body arranged spaced in the rolling direction, in order to effect the rotating-speed differential for the shearing of the fibres.

9. Method according to Claim 8, **characterised by** providing the device with the shearing apparatus in such a manner that for each of the at least three rolling bodies, an opposite rolling body rotating in the opposite direction is arranged to form a rolling body pair, between which the respective flange of the preform profile to be produced is guided.

10. Method according to one of Claims 6 to 9, **characterised by** varying the rotating speed of the rolling body by means of the control apparatus during the shaping process in such a manner that the radius of curvature of the curvature of the preform to be produced is varied.

## Revendications

1. Dispositif (1) pour la fabrication d'une préforme incurvée (8), qui présente au moins partiellement une géométrie de composant d'un composant composite renforcé par des fibres à fabriquer, à partir de semi-produits fibreux bidimensionnels (7), **caractérisé en ce qu'**un système de cisaillement (2) est prévu, qui comprend au moins deux éléments de laminage tournants (3a, 4a), disposés à distance l'un de l'autre dans le sens du laminage (10), et un dispositif de commande (6) relié aux éléments de laminage (3a, 4a), le dispositif de commande (6) étant conçu pour ajuster des vitesses de rotation (V1, V2) différentes l'une de l'autre des éléments de laminage (3a, 4a), et les éléments de laminage (3a, 4a) étant conçus pour s'appuyer par une liaison dynamique contre un semi-produit fibreux (7) introduit dans le dispositif (1) et coopérer avec ce semi-produit ; que, grâce à une différence de vitesse de rotation (V2, V1), ajustée à l'aide du dispositif de commande (6) entre les éléments de laminage (3a, 4a) disposés à distance l'un de l'autre dans le sens du laminage (10), un cisaillement des fibres du semi-produit fibreux (7) est réalisé, pour la formation de la courbure (11) de la préforme incurvée (8) à fabriquer, le dispositif de commande excitant les éléments de laminage individuels de façon que la vitesse de rotation de chacun d'eux (U₁, U₂) puisse être ajustée.

2. Dispositif (1) selon la revendication 1, **caractérisé en ce que**, dans le cas d'au moins un élément de laminage (3a, 4a, 5a), un élément de laminage (3b, 4b, 5b) opposé, tournant en sens contraire, est disposé pour la formation d'une paire d'éléments de laminage (3, 4, 5), le semi-produit fibreux bidimensionnel (7) étant guidé dans le sens du laminage (10) entre les éléments de laminage tournant en sens contraire.

3. Dispositif (1) selon la revendication 1 ou 2, **caractérisé en ce que** le système de cisaillement (2) comprend au moins trois éléments de laminage (3a, 4a, 5a), au moins deux des au moins trois éléments de laminage (3a, 5a) s'appuyant, opposés l'un à l'autre, chacun contre une collerette (9a, 9b) d'un profil de préforme (8) à fabriquer, et au moins l'un des trois éléments de laminage (4a) étant disposé, dans le sens du laminage (10), à distance des au moins deux éléments de laminage opposés (3a, 5a), et s'appuyant contre l'une des collerettes (9a) du profil de préforme à fabriquer (8), et les dispositifs de commande (6) étant conçus de façon à ajuster, pour les au moins deux éléments de laminage opposés (3a, 5b), la même vitesse de rotation (V1) et, pour l'au moins un élément de laminage (4a) disposé à distance dans le sens du laminage (10), à ajuster une vitesse de rotation (V2) qui en est différente, pour réaliser la différence de vitesses de rotation (V2-V1) pour le cisaillement des fibres.

4. Dispositif (1) selon la revendication 3, **caractérisé en ce que**, pour chacun des au moins trois éléments de laminage (3a, 4a, 5a), un élément de laminage opposé, tournant en sens contraire (3b, 4b, 5b) est disposé pour la formation d'une paire d'éléments de laminage (3, 4, 5), entre lesquels est guidée chaque collerette (9a, 9b) du profil de préforme à fabriquer (8).

5. Dispositif (1) selon l'une des revendications précédentes, **caractérisé en ce que** le dispositif de commande (6) est conçu pour faire varier, pendant le processus de déformation, la vitesse de rotation (V1, V2) des éléments de laminage, de telle sorte que varie le rayon de courbure de la courbure (11) de la préforme à fabriquer.

6. Procédé de fabrication d'une préforme incurvée, qui présente au moins partiellement une géométrie de composant d'un composant composite renforcé par des fibres à fabriquer, à partir de semi-produits fibreux bidimensionnels, **caractérisé par**
a) la mise à disposition d'un dispositif comportant un système de cisaillement, qui comprend au moins deux éléments de laminage tournants, disposés à distance l'un de l'autre dans le sens du laminage, et un dispositif de commande relié aux éléments de laminage,
b) l'introduction du semi-produit fibreux bidimensionnel dans le système de cisaillement du dispositif de telle sorte que le semi-produit fibreux bidimensionnel s'appuie par liaison dynamique contre les éléments de laminage, et
c) l'ajustement d'une vitesse de rotation pour chaque élément de laminage, de telle sorte que, sous l'effet d'une différence de vitesses de rotation ajustée à l'aide du dispositif de commande entre les éléments de laminage disposés à distance l'un de l'autre dans le sens du laminage, la courbure de la préforme incurvée à fabriquer soit réalisée, le dispositif de commande excitant les éléments de laminage individuels de façon que la vitesse de rotation de chacun d'eux soit ajustée.

7. Procédé selon la revendication 6, **caractérisé par** la mise à disposition du dispositif comportant le système de cisaillement de telle sorte que l'au moins un élément de laminage, un élément de laminage opposé, tournant en sens contraire, soit disposé pour la formation d'une paire d'éléments de laminage, le semi-produit fibreux bidimensionnel étant guidé dans le sens du laminage entre les éléments de laminage tournant en sens contraire.

8. Procédé selon l'une des revendications 6 ou 7, **caractérisé par** la mise à disposition du dispositif, avec le système de cisaillement, de telle sorte que le système de cisaillement comprenne au moins trois éléments de laminage, au moins deux des au moins trois éléments de laminage s'appuyant d'une manière opposée, chacun contre une collerette d'un profil de préforme à fabriquer, et au moins l'un des trois éléments de laminage étant, dans le sens du laminage, disposé à distance des au moins deux éléments de laminage opposés, et s'appuyant contre l'une des collerettes du profil de préforme à fabriquer, et par l'ajustement de la vitesse de rotation des éléments de laminage à l'aide du dispositif de commande, de telle sorte que, pour les au moins deux éléments de laminage opposés, on ajuste la même vitesse de rotation, et que, pour l'au moins un élément de laminage disposé à distance dans le sens du laminage, on ajuste une vitesse de rotation qui en est différente, pour réaliser la différence de vitesses de rotation pour le cisaillement des fibres.

9. Procédé selon la revendication 8, **caractérisé par** la mise à disposition du dispositif avec le système de cisaillement, de telle sorte que, pour chacun des au moins trois éléments de laminage, un élément de laminage opposé, tournant en sens contraire, est disposé pour la formation d'une paire d'éléments de laminage, entre chacun desquels est guidée la collerette du profil de préforme à fabriquer.

10. Procédé selon l'une des revendications 6 à 9, **caractérisé par** une variation de la vitesse de rotation de l'élément de laminage à l'aide du dispositif de commande pendant le processus de déformation, de façon à faire varier le rayon de courbure de la courbure de la préforme à fabriquer.
